# EUROPÄISCHE PATENTSCHRIFT

(11) **EP 4 141 313 B1**
(45) Veröffentlichungstag und Bekanntmachung des Hinweises auf die Patenterteilung: **29.05.2024**
(21) Anmeldenummer: 22187552.9
(22) Anmeldetag: 28.07.2022
(51) Int. Cl.: F16M 11/04

(54) **ARRETIERVORRICHTUNG, KAMERAHALTERUNG MIT ARRETIERVORRICHTUNG**
LOCKING DEVICE CAMERA HOLDER WITH LOCKING DEVICE
DISPOSITIF D'ARRÊT, SUPPORT DE CAMÉRA POURVU DE DISPOSITIF D'ARRÊT

(30) Priorität: 30.07.2021 DE 202021104086 U
(43) Veröffentlichungstag der Anmeldung: 01.03.2023
(73) Patentinhaber: Arnold & Richter Cine Technik GmbH & Co. Betriebs KG, 80807 München (DE)
(72) Erfinder: SCHALLER, Curt, 81543 München (DE)
(74) Vertreter: Isarpatent

(56) Entgegenhaltungen:
- EP-A2- 2 322 839
- DE-A1-102009 038 823
- KR-A- 20110 068 437
- US-A- 2 840 334
- US-A1- 2011 315 840
- US-B1- 10 584 935

## Beschreibung

Die Erfindung betrifft eine Arretiervorrichtung sowie eine Kamerahalterung.

Zur Montage von Kameras an Halterungen, z.B. an einem Stativ, werden häufig sogenannte Schwalbenplatten eingesetzt. Dazu ist die Schwalbenschwanzplatte an der Kamera befestigt, und zur Montage der Kamera wird die Schwalbenschwanzplatte in eine Bahn der Arretiervorrichtung eingelassen und dort arretiert. Die Arretiervorrichtung ist an der Halterung befestigt.

Bei bekannten Lösungen, wie der aus der EP 2 322 839 A2 bekannten Arretiervorrichtung, ergeben sich beim Einlassen der Schwalbenschwanzplatte in die Bahn der Arretiervorrichtung häufig Probleme, z.B. aufgrund eines Verkantens oder nicht genau zueinander passenden Abmessungen der Bahn einerseits und der Schwalbenschwanzplatte andererseits.

Aufgabe der vorliegenden Erfindung ist es, eine Arretiervorrichtung zum Arretieren einer in eine Bahn der Arretiervorrichtung eingelassenen Schwalbenschwanzplatte vorzuschlagen, die einerseits ein leichtes Einlassen der Schwalbenschwanzplatte erlaubt und andererseits eine sichere Arretierung gewährleistet.

Hiervon ausgehend wird die Arretiervorrichtung des unabhängigen Anspruchs 1 vorgeschlagen. Merkmale einiger hier beispielhaft beschriebener Ausführungsbeispiele sind in den Unteransprüchen angegeben. Zudem wird eine Kamerahalterung mit einer solchen Arretiervorrichtung vorgeschlagen.

Weitere Einzelheiten und Vorteile der Erfindung werden bei der nachfolgenden Beschreibung einiger Ausführungsbeispiele anhand der Figuren deutlich werden.

Es zeigen:
- Fig. 1: exemplarisch und schematisch eine herkömmliche Kamerahalterung;
- Fig. 2: exemplarisch und schematisch vier perspektivische Ansichten (A) bis (D) einer Arretiervorrichtung gemäß einer Ausführungsform; und
- Fig. 3: exemplarisch und schematisch drei perspektivische Ansichten (A) bis (C) einer Arretiervorrichtung gemäß einer Ausführungsform.

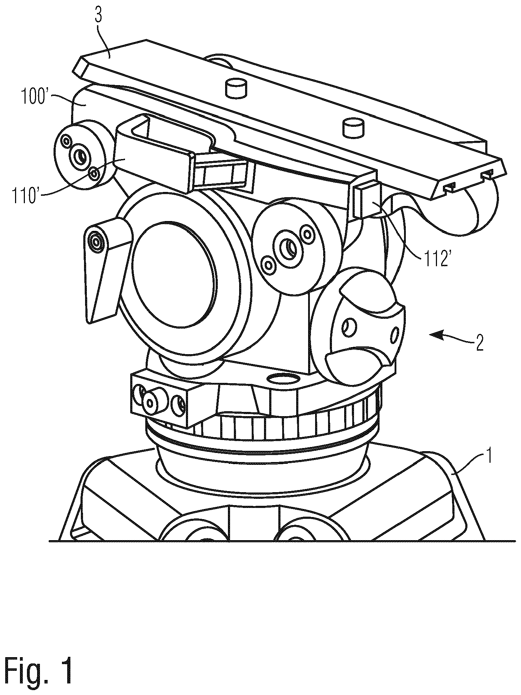

Fig. 1 zeigt exemplarisch und schematisch eine herkömmliche Kamerahalterung mit einem Stativ 1 und einer Gelenkanordnung 2. An der Gelenkanordnung 2 befindet sich eine Arretiervorrichtung 100' zum Arretieren einer Schwalbenschwanzplatte 3, die in eine Bahn der Arretiervorrichtung 100' eingelassen worden ist, beispielsweise durch seitliches Einschieben. Zum Arretieren der Schwalbenschwanzplatte 3 ist ein Klemmelement 110' vorgesehen, dass manuell betätigt werden kann und die eingelassene Schwalbenschwanzplatte 3 arretiert, indem es eine Bewegung der Schwalbenschwanzplatte 3 entlang der Längserstreckung der Bahn verhindert. Die Arretierung wird gelöst, in dem Druckknopf 112' betätigt wird.

Die in Fig. 1 gezeigte herkömmliche Arretiervorrichtung 100' erweist sich als unsicher und impraktikabel: Zum einen kann durch versehentliches Betätigen des Druckknopfes 112' ein Hinausgleiten der Schwalbenschwanzplatte 3 ermöglicht werden, und zum anderen muss die Schwalbenschwanzplatte "passgenau" in die Bahn eingelassen werden.

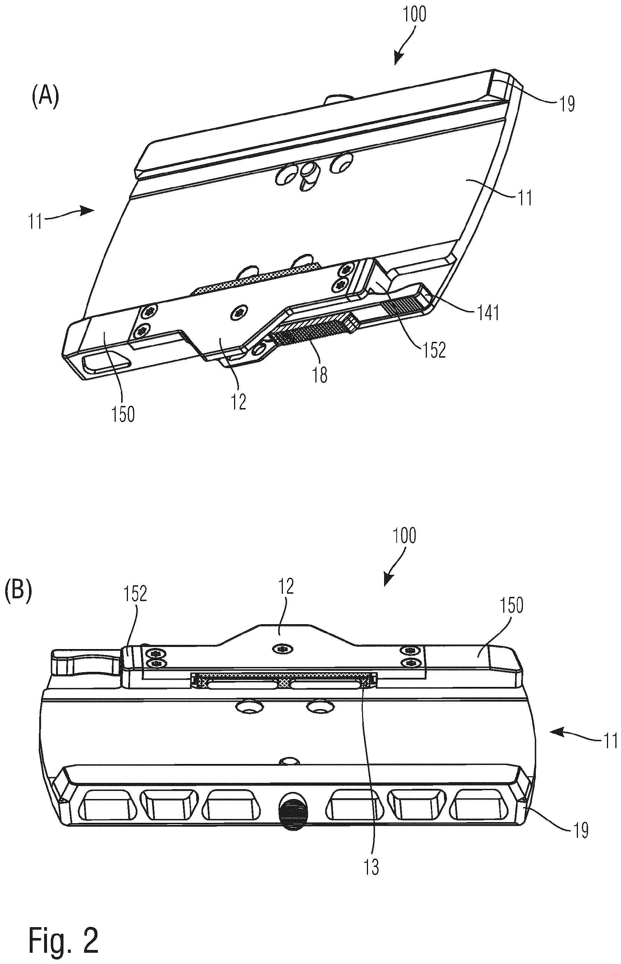

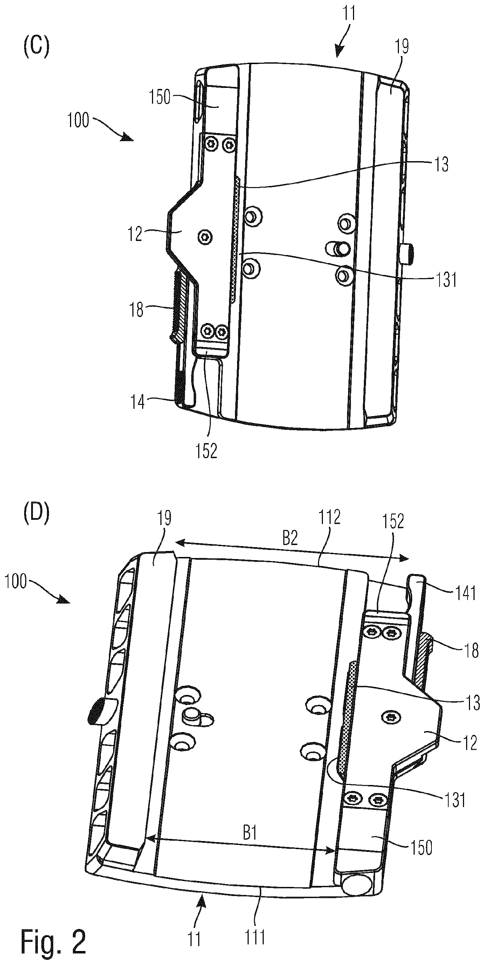

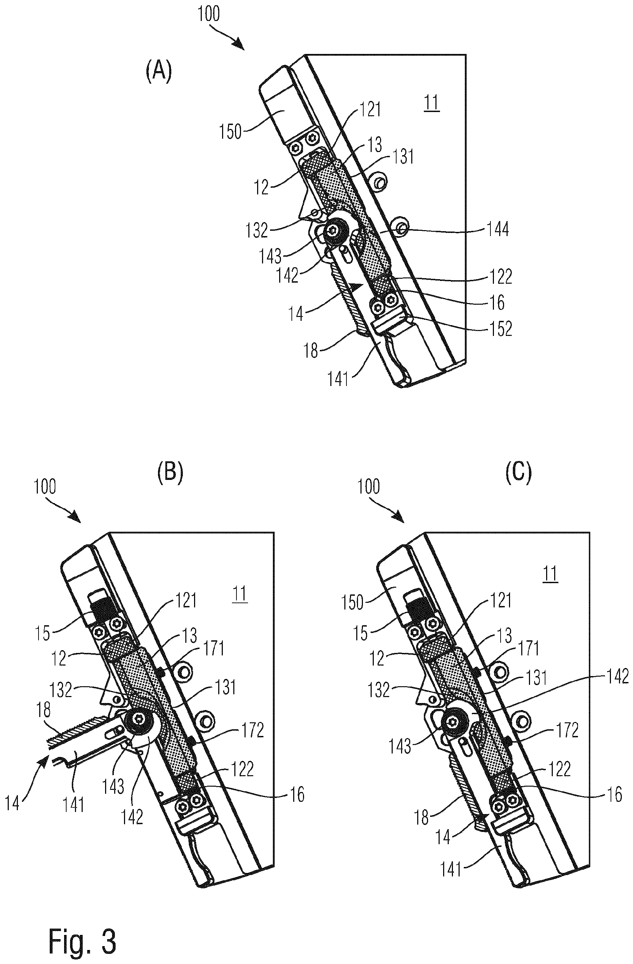

Fig. 2 zeigt vier Ansichten (A) bis (D) einer Ausführungsform einer erfindungsgemäßen Arretiervorrichtung 100, die diese Nachteile überwindet. Nachstehend wird auch auf Fig. 3 verwiesen:

Die Arretiervorrichtung 100 zum Arretieren einer in eine Bahn 11 der Arretiervorrichtung 100 eingelassenen Schwalbenschwanzplatte 3 umfasst eine eine Seite der Bahn 11 begrenzende Basis 12. Die andere Seite der Bahn 11 ist durch eine schräge Seitenwand 19 begrenzt, deren Winkel zum Boden der Bahn 11 entsprechend der Schwalbenschwanzplatte 3 gewählt ist.

Der hier verwendete Begriff "Bahn" soll nicht implizieren, dass die Schwalbenschwanzplatte 3 nur seitlich in die Arretiervorrichtung 100 eingelassen werden kann (sog. "Back-Loader" oder "Front-Loader"). Dies ist zwar möglich, aber auch ein Einbringen Schwalbenschwanzplatte 3 von oben ("Top-Loader") kann zusätzlich ermöglicht sein.

Ein Gehäuseteil 150 kann an einem ersten Endabschnitt 111 der Bahn 11 mit der gegenüberliegenden Seitenwand 19 eine erste Bahnbreite B1 definieren (s. Fig. 2 (D)). Ein zweites Gehäuseteil 152 an einem zweiten Endabschnitt 112 der Bahn 11 kann mit der gegenüberliegenden Seitenwand 19 eine zweite Bahnbreite B2 definieren, die größer ist als die erste Bahnbreite B1. Dies kann das seitliche Einführen der Schwalbenschwanzplatte 3 am zweiten Endabschnitt 112 der Bahn 11 erleichtern.

Die Arretiervorrichtung 100 umfasst weiter einen an der Basis 12 seitlich verschiebbar angeordneten Klemmblock 13 mit einer zur Bahn 11 weisenden Arretierseite 131 und einer der Arretierseite 131 gegenüberliegenden Klemmseite 132. Ein Abstand zwischen der Arretierseite 131 und der Klemmseite 132 variiert in einer Richtung parallel zur Längserstreckung der Bahn 11. Z.B. ist die Klemmseite 132 dazu gewölbt, wie dargestellt, was zusätzlich Platzersparnisse bietet. Die Arretierseite 131 greift zum Arretieren der Schwalbenschwanzplatte 3 an einer Seitenfläche Schwalbenschwanzplatte 3 an und kann, wie die Seitenwand 19, in einem entsprechenden Winkel zur Oberfläche der Bahn 11 angeordnet sein. Zur besseren Arretierung der Schwalbenschwanzplatte 3 kann die z.B. flächig ausgebildete Arretierseite 131 mit einem Bremsbelag versehen sein, z.B. einem Gummibelag.

Die Arretiervorrichtung 100 umfasst weiter einen an der Basis 12 rotierbar angeordneten Klemmhebel 14 mit einem Handteil 141 und einem Exzenterteil 142, wobei das Exzenterteil 142 zum Verschieben des Klemmblocks 13 an der Klemmseite 132 angreift. Das Handteil 141 und das Exzenterteil 142 sind beispielsweise über eine Achse 143 miteinander gekoppelt. Die Rotation des Handteils 141 um die Achse 143 bewirkt das Angreifen des Exzenterteils 142 an der Klemmseite 132. Dies bewirkt die Verschiebung des Klemmblocks 13 in Richtung zur Bahn 11 und somit das Ausüben einer Klemmkraft auf die (in Fig. 2 und 3 nicht gezeigte) Schwalbenschwanzplatte 3. Auf diese Weise wird die Schwalbenschwanzplatte 3 arretiert.

Eine Grenzfläche 144 (s. gestrichelte Linie in Fig. 3 (A)), die durch den Kontakt zwischen dem Exzenterteil 142 und der Klemmseite 132 definiert ist, liegt nicht parallel zur Arretierseite 131, wenn der Klemmhebel 14 zur Arretierung der Schwalbenschwanzplatte 3 positioniert ist (Fig. 2 (A) bis (D) sowie Fig. 3 (A) und (C)). Dazu ist das Exzenterteil 142 z.B. konisch konvex gestaltet, und die Klemmseite 132 konisch konkav.

Die Basis 12 und der Klemmblock 13 sind parallel zur Längserstreckung der Bahn 11 und bezogen auf die Achse 143 des Exzenterteils 142 verschiebbar angeordnet sind. Zusätzlich kann auch die Achse 143 des Exzenterteils 142 parallel zur Längserstreckung der Bahn 11 verlagerbar angeordnet sein.. Aufgrund des variierenden Abstands zwischen Klemmseite 132 und Arretierseite 131 ist der Abstand zwischen der Grenzfläche 144 und der Achse 143 variabel einstellbar. Damit ist auch die durch den Klemmblock 13 und der Seitenwand 19 definierte Bahnbreite variabel einstellbar bzw. die durch den Klemmblock auf die Schwalbenschwanzplatte 3 ausgebübte Klemmkraft (bzw. der Anpressdruck). Auf diese Weise kann die Arretiervorrichtung 100 Schwalbenschwanzplatten unterschiedlicher Breite aufnehmen, insbesondere auch solche Schwalbenschwanzplatten, die eine geringere Breite als die Bahn 11 aufweisen, wie sie durch die Gehäuseteile 150 und 152 einerseits und die Seitenwand 19 andererseits definiert ist.

Anstelle einer gewölbten Klemmseite 132 könnte auch eine linear verlaufende Klemmseite 132 vorgesehen sein, die einem Winkel zur Arretierseite 131 angeordnet ist, um den variierenden Abstand zwischen Klemmseite 132 und Arretierseite 131 zu erzielen.

Zur Bewirkung der Längsverschiebung der Basis 12 umfasst die Arretiervorrichtung ein Stellmittel 15, z.B. eine Stellschraube. Das Stellmittel 15 kann in dem Gehäuseteil 150 vorgesehen sein, das einerseits einen der Seitenwand 19 gegenüberliegenden Seitenwandabschnitt ausbildet und andererseits an die Basis 12 angrenzt, wie dargestellt. Das Stellmittel 15 erlaubt aufgrund der geometrischen Ausgestaltungen des Exzenterteils 142 und der Klemmseite 132 somit die Einstellung der Klemmkraft. Zudem kann ein Gegendruckmittel 16, z.B. eine Druckfeder, vorgesehen sein, das bzw. die der Längsverschiebung der Basis 12 entgegenwirkt. Das Gegendruckmittel 16 ist z.B. in dem weiteren Gehäuseteil 152 untergebracht, das einerseits einen der Seitenwand 19 gegenüberliegenden weiteren Seitenwandabschnitt ausbildet und andererseits an die Basis 12 angrenzt.

Der Klemmhebel 14 und insbesondere seine Achse 143 sind bevorzugt ortsfest angeordnet und verschieben sich nicht durch Betätigung des Stellmittels 15.

Der Klemmblock 13 kann schwimmend gelagert sein. Die Basis ist dazu beispielsweise als Schlitten ausgebildet, in dem der Klemmblock 13 seitlich verschiebbar angeordnet ist. Z.B. ist der Klemmblock 13 zwischen zwei Endabschnitten 121, 122 der Basis senkrecht zur Längserstreckung der Bahn 11 verschiebbar gelagert. Der Schlitten, der sich z.B. U-Förmig unterhalb des Klemmblocks 13 befindet, sorgt dafür, dass sich der Klemmblock 13 beim Öffnen der Klemmung gleichmäßig und parallel von der Seitenkante der Schwalbenschwanzplatte wegbewegt und somit vollständig öffnet. Zudem können Druckfedern 171 und 172, die den Klemmlock 13 in Richtung des Exzenterteils 142 drücken, vorgesehen sein (s. Fig. 3 (B) und (C)).

Bei einer Ausführungsform umfasst die Arretiervorrichtung ein Sicherungselement 18, das zwischen einer ersten Position und einer zweiten Position beweglich gelagert ist, wobei die Rotierbarkeit des Klemmhebels 14 blockiert ist, wenn das Sicherungselement 18 in der ersten Position ist (s. Fig. 3 (A) und (C)). Das Sicherungselement 18 ist z.B. unter Vorspannung in der ersten Position gelagert.

Das Sicherungselement ist am Handteil 141 angeordnet und erfordert das manuelle Überführen in die zweite Position, z.B. durch Verschieben, um dem Klemmhebel 14 zu betätigen (Fig. 3 (B)).

Die Arretiervorrichtung 100 ist in einer Ausführungsform ausgebildet, sowohl als Top-Loader, Front Loader und Back Loader zu fungieren, also das Einlassen der Schwalbenschwanzplatte 3 von oben als auch durch Einschieben ausgehend von den beiden Endabschnitten 111 und 112 zu ermöglichen.

Durch die Verschiebbarkeit des Klemmblocks 13 entlang der Längserstreckung der Bahn 11 ist Reichweite der seitlichen Verschiebung des Klemmblocks 14 und damit die Klemmkraft einstellbar. Somit können verschiedene Schwalbenschwanzplatten arretiert werden bzw. Toleranzen in den geometrischen Abmessungen der Schwalbenschwanzplatte in Kauf genommen werden.

Der Boden der Bahn 11 kann durchgehend flächig ausgebildet sein und muss nicht zwingend Sicherungselemente zur Sicherung der Arretierung der Schwalbenschwanzplatte aufweisen.

Das Handteil 141 kann z.B. um 90° rotiert werden. Im nicht arretierten Zustand steht das Handteil 141 ca. in einem 90° Winkel zur Längserstreckung der Bahn 11 (Fig. 3 (B)). Im arretierten Zustand liegt das Handteil 141 flach und bündig zu dem weiteren Gehäuseteil 152. In einer hier nicht gezeigten Mittelstellung steht das Handteil 141 ca. in einem 90° Winkel zur Längserstreckung der Bahn 11; dann kann die eingelassene Schwalbenschwanzplatte 3 noch vor und zurückgeschoben werden, aber nicht mehr aus der Bahn ausgeschwenkt werden.

## Patentansprüche

1. Arretiervorrichtung (100) zum Arretieren einer in eine Bahn (11) der Arretiervorrichtung (100) eingelassenen Schwalbenschwanzplatte (3), umfassend:
- eine eine Seite der Bahn (11) begrenzende Basis (12);
- einen an der Basis (12) seitlich verschiebbar angeordneten Klemmblock (13) mit einer zu der Bahn (11) weisenden Arretierseite (131) und mit einer der Arretierseite (131) gegenüberliegenden Klemmseite (132), wobei ein Abstand zwischen der Arretierseite (131) des Klemmblocks (13) und der Klemmseite (132) des Klemmblocks (13) in einer Richtung parallel zu einer Längserstreckung der Bahn (11) variiert;
- einen an der Basis (12) rotierbar angeordneten Klemmhebel (14) mit einem Handteil (141) und mit einem Exzenterteil (142), wobei das Exzenterteil (142) des Klemmhebels (14) zum Verschieben des Klemmblocks (13) an der Klemmseite (132) des Klemmblocks (13) angreift,
**dadurch gekennzeichnet, dass**
- die Basis (12) und der Klemmblock (13) parallel zu der Längserstreckung der Bahn (11) und bezogen auf eine Achse (143) des Exzenterteils (142) des Klemmhebels (14) verschiebbar angeordnet sind.

2. Arretiervorrichtung (100) nach Anspruch 1, wobei eine Grenzfläche (144), die durch den Kontakt zwischen dem Exzenterteil (142) des Klemmhebels (14) und der Klemmseite (132) des Klemmblocks (13) definiert ist, nicht parallel zu der Arretierseite (131) des Klemmblocks (13) liegt.

3. Arretiervorrichtung (100) nach Anspruch 1 oder 2, umfassend ein Stellmittel (15), insbesondere eine Stellschraube, zur Bewirkung einer Längsverschiebung der Basis (12).

4. Arretiervorrichtung (100) nach Anspruch 3, umfassend ein Gegendruckmittel (16), insbesondere eine Druckfeder, welche der Längsverschiebung der Basis (12) entgegenwirkt.

5. Arretiervorrichtung (100) nach einem der vorstehenden Ansprüche, wobei der Klemmblock (13) schwimmend gelagert ist.

6. Arretiervorrichtung (100) nach einem der vorstehenden Ansprüche, wobei die Basis (12) als Schlitten ausgebildet ist, in dem der Klemmblock (13) seitlich verschiebbar angeordnet ist.

7. Arretiervorrichtung (100) nach einem der vorstehenden Ansprüche, weiter umfassend mindestens eine Druckfeder (171, 172), die den Klemmblock (13) in Richtung des Exzenterteils (142) des Klemmhebels (14) drückt.

8. Arretiervorrichtung (100) nach einem der vorstehenden Ansprüche, wobei das Exzenterteil (142) des Klemmhebels (14) konisch konvex gestaltet ist.

9. Arretiervorrichtung (100) nach einem der vorstehenden Ansprüche, wobei die Klemmseite (132) des Klemmblocks (13) konisch konkav gestaltet ist.

10. Arretiervorrichtung (100) nach einem der vorstehenden Ansprüche, wobei die Arretierseite (131) des Klemmblocks (13) mit einem Bremsbelag versehen ist.

11. Arretiervorrichtung (100) nach einem der vorstehenden Ansprüche, weiter umfassend ein Sicherungselement (18), das zwischen einer ersten Position und einer zweiten Position beweglich gelagert ist, wobei die Rotierbarkeit des Klemmhebels (14) blockiert ist, wenn das Sicherungselement (18) in der ersten Position ist.

12. Arretiervorrichtung (100) nach Anspruch 11, wobei das Sicherungselement (18) unter Vorspannung in der ersten Position gelagert ist.

13. Arretiervorrichtung (100) nach einem der vorstehenden Ansprüche, wobei das Exzenterteil (142) des Klemmhebels (14) zum Verschieben des Klemmblocks (13) in dem Bereich, in welchem der Abstand zwischen der Arretierseite (131) und der Klemmseite (132) des Klemmblocks (13) in der Richtung parallel zu der Längserstreckung der Bahn (11) variiert, an der Klemmseite (132) des Klemmblocks (13) angreift.

14. Kamerahalterung (1, 2), umfassend eine Arretiervorrichtung (100) nach einem der vorstehenden Ansprüche.

## Claims

1. Locking device (100) for locking a dovetail plate (3) admitted into a track (11) of the locking device (100), comprising:
- a base (12) delimiting one face of the track (11);
- a clamping block (13), arranged laterally displaceably on the base (12) and comprising a locking face (131) facing the track (11) and a clamping face (132) opposite the locking face (131), a distance between the locking face (131) of the clamping block (13) and the clamping face (132) of the clamping block (13) varying in a direction parallel to a longitudinal extension of the track (11);
- a clamping lever (14), arranged rotatably on the base (12) and comprising a handle part (141) and a cam part (142), the cam part (142) of the clamping lever (14) acting on the clamping face (132) of the clamping block (13) to displace the clamping block (13),
**characterised in that**
- the base (12) and the clamping block (13) are arranged displaceably parallel to the longitudinal extension of the track (11) and with respect to an axis (143) of the cam part (142) of the clamping lever (14).

2. Locking device (100) according to claim 1, wherein a boundary surface (144), defined by the contact between the cam part (142) of the clamping lever (14) and the clamping face (132) of the clamping block (13), is positioned non-parallel to the locking face (131) of the clamping block (13) .

3. Locking device (100) according to either claim 1 or claim 2, comprising an adjusting means (15), in particular an adjusting screw, for bringing about a longitudinal displacement of the base (12).

4. Locking device (100) according to claim 3, comprising a resistance means (16), in particular a compression spring, which counters the longitudinal displacement of the base (12) .

5. Locking device (100) according to any of the preceding claims, wherein the clamping block (13) is floatingly mounted.

6. Locking device (100) according to any of the preceding claims, wherein the base (12) is formed as a slide in which the clamping block (13) is arranged laterally displaceably.

7. Locking device (100) according to any of the preceding claims, further comprising at least one compression spring (171, 172) which presses the clamping block (13) towards the cam part (142) of the clamping lever (14).

8. Locking device (100) according to any of the preceding claims, wherein the cam part (142) of the clamping lever (14) is configured conically convex.

9. Locking device (100) according to any of the preceding claims, wherein the clamping face (132) of the clamping block (13) is configured conically concave.

10. Locking device (100) according to any of the preceding claims, wherein the locking face (131) of the clamping block (13) is provided with a brake lining.

11. Locking device (100) according to any of the preceding claims, further comprising a securing element (18) mounted movably between a first position and a second position, the rotatability of the clamping lever (14) being blocked when the securing element (18) is in the first position.

12. Locking device (100) according to claim 11, wherein the securing element (18) is mounted in the first position under bias.

13. Locking device (100) according to any of the preceding claims, wherein the cam part (142) of the clamping lever (14) acts on the clamping face (132) of the clamping block (13) to displace the clamping block (13) in the region where the distance between the locking face (131) and the clamping face (132) of the clamping block (13) varies in the direction parallel to the longitudinal extension of the track (11).

14. Camera holder (1, 2) comprising a locking device (100) according to any of the preceding claims.

## Revendications

1. Dispositif de blocage (100) destiné à bloquer une plaque à queue d'aronde (3) enchâssée dans une glissière (11) du dispositif de blocage (100), comprenant :
- une base (12) délimitant un côté de la glissière (11) ;
- un bloc de serrage (13) agencé de façon à pouvoir être déplacé latéralement sur la base (12), ayant une face de blocage (131) dirigée vers la glissière (11) et une face de serrage (132) opposée à la face de blocage (131), dans lequel une distance entre la face de blocage (131) du bloc de serrage (13) et la face de serrage (132) du bloc de serrage (13) varie dans une direction parallèle à une extension longitudinale de la glissière (11) ;
- un levier de serrage (14) agencé de façon à pouvoir tourner sur la base (12), ayant un manche (141) et une partie à excentrique (142), dans lequel la partie à excentrique (142) du levier de serrage (14) s'applique contre la face de serrage (132) du bloc de serrage (13) afin de déplacer le bloc de serrage (13),
**caractérisé en ce que**
- la base (12) et le bloc de serrage (13) sont agencés parallèlement à l'extension longitudinale de la glissière (11) et de manière mobile par rapport à un axe (143) de la partie à excentrique (142) du levier de serrage (14).

2. Dispositif de blocage (100) selon la revendication 1, dans lequel une interface (144) définie par le contact entre la partie à excentrique (142) du levier de serrage (14) et la face de serrage (132) du bloc de serrage (13) n'est pas parallèle à la face de blocage (131) du bloc de serrage (13) .

3. Dispositif de blocage (100) selon la revendication 1 ou 2, comprenant des moyens de réglage (15), en particulier une vis de réglage, pour entraîner un déplacement longitudinal de la base (12).

4. Dispositif de blocage (100) selon la revendication 3, comprenant des moyens de contre-pression (16), en particulier un ressort de compression, qui contrecarrent le déplacement longitudinal de la base (12).

5. Dispositif de blocage (100) selon l'une des revendications précédentes, dans lequel le bloc de serrage (13) est monté de façon flottante.

6. Dispositif de blocage (100) selon l'une des revendications précédentes, dans lequel la base (12) est conçue comme un coulisseau dans lequel le bloc de serrage (13) est agencé de façon à pouvoir être déplacé latéralement.

7. Dispositif de blocage (100) selon l'une des revendications précédentes, comprenant en outre au moins un ressort de compression (171, 172) qui pousse le bloc de serrage (13) en direction de la partie à excentrique (142) du levier de serrage (14).

8. Dispositif de blocage (100) selon l'une des revendications précédentes, dans lequel la partie à excentrique (142) du levier de serrage (14) est conçue de manière coniquement convexe.

9. Dispositif de blocage (100) selon l'une des revendications précédentes, dans lequel la face de serrage (132) du bloc de serrage (13) est conçue de manière coniquement concave.

10. Dispositif de blocage (100) selon l'une des revendications précédentes, dans lequel la face de blocage (131) du bloc de serrage (13) est pourvue d'une plaquette de frein.

11. Dispositif de blocage (100) selon l'une des revendications précédentes, comprenant en outre un élément de blocage (18) monté de manière mobile entre une première position et une seconde position, dans lequel la capacité de rotation du levier de serrage (14) est bloquée lorsque l'élément de blocage (18) est dans la première position.

12. Dispositif de blocage (100) selon la revendication 11, dans lequel l'élément de blocage (18) est monté sous précontrainte dans la première position.

13. Dispositif de blocage (100) selon l'une des revendications précédentes, dans lequel la partie à excentrique (142) du levier de serrage (14) s'applique contre la face de serrage (132) du bloc de serrage (13) afin de déplacer le bloc de serrage (13) dans la zone dans laquelle la distance entre la face de blocage (131) et la face de serrage (132) du bloc de serrage (13) varie dans la direction parallèle à l'extension longitudinale de la glissière (11).

14. Support de caméra (1, 2) comprenant un dispositif de blocage (100) selon l'une des revendications précédentes.
